# EUROPÄISCHE PATENTSCHRIFT

(11) **EP 1 223 484 B1**
(45) Veröffentlichungstag und Bekanntmachung des Hinweises auf die Patenterteilung: **05.11.2008**
(21) Anmeldenummer: 01129612.6
(22) Anmeldetag: 12.12.2001
(51) Int. Cl.: G05B 19/042

(54) **Installationsgerät für den Anschluss an EIB-Busleitungen**
Installation apparatus for a connection to EIB-bus lines
Appareil d'installation pour la connection sur les lignes d'un bus EIB

(30) Priorität: 11.01.2001 DE 10100856
(43) Veröffentlichungstag der Anmeldung: 17.07.2002
(73) Patentinhaber: ABB AG, 68309 Mannheim (DE)
(72) Erfinder: Harre, Björn, Dipl.-Ing., 59192 Bergkamen (DE)
(74) Vertreter: Miller, Toivo

(56) Entgegenhaltungen:
- DE-A1- 3 907 432
- DE-A1- 19 706 957
- DE-C1- 4 328 663
- DE-U1- 29 609 803
- US-A- 5 619 196
- PATENT ABSTRACTS OF JAPAN Bd. 2000, Nr. 10, 17. November 2000 (2000-11-17) & JP 2000 205726 A (LG ELECTRONICS INC), 28. Juli 2000 (2000-07-28)

## Beschreibung

Die Erfindung bezieht sich auf ein Installationsgerät, das an Busleitungen des Europäischen Installationsbusses EIB anschließbar ist, und das einen Mikroprozessor sowie Mittel zur Aktivierung seines Programmiermodus enthält.

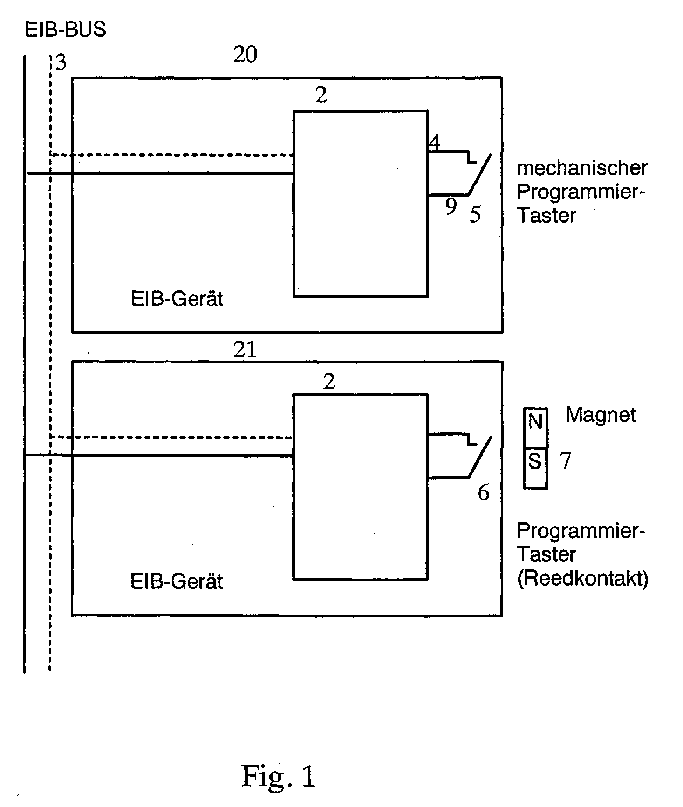

Fig. 1 zeigt zwei bekannte Ausführungen von EIB-Installationsgeräten 20, 21. Dabei sind EIB-Busleitungen 3 mit daran als Teilnehmer angeschlossenen Installationsgeräten 20, 21 dargestellt, wobei der Bus gemäß den Spezifikationen der European Installation Bus Association (EIBA) ein verdrilltes Adernpaar ist, über das sowohl Information, als auch Energie für die Bordnetzversorgung der Teilnehmergeräte geleitet sind. Die Installationsgeräte 20, 21 sind mittels einer nicht im einzelnen dargestellten Busankopplung sowie sonstiger Hard- und Softwaremittel als EIB-Teilnehmergeräte ausgeführt. Die Hard- und Softwaremittel enthalten einen Mikroprozessor 2 einschließlich EIB-Software. Der Mikroprozessor 2 gibt ein Steuersignal 9 aus, das mittels eines Kontakts 5 oder 6 auf einen Signaleingang 4 des Mikroprozessors 2 zur Aktivierung oder Deaktivierung seines Programmiermodus leitbar ist.

Bei dem im oberen Teil der Fig. 1 gezeigten Installationsgerät 20 ist am Mikroprozessor 2 ein mechanischer Programmiertaster 5 angeschlossen, mit dem das Steuersignal 9 eingebbar ist. Bei dem im unteren Teil der Fig. 1 gezeigten Installationsgerät 21 ist am Mikroprozessor 2 ein mittels eines Magneten 7 zu betätigender Reedkontakt 6 als Programmiertaster angeschlossen, mit dem das Steuersignal 9 eingebbar ist. Nachteilig ist bei diesen Anordnungen, daß zur Einstellung des Geräts 20 oder 21 auf bestimmte Betriebsarten oder Funktionen, sowie zur Parametereingabe - nicht dargestellte - zusätzliche Betätigungsmittel erforderlich sind.

Aus der DE 39 07 432 A1 ist eine Steuerungsanordnung mit einem Mikrocomputer für elektrische Haushaltsgeräte, wie Wasch- oder Geschirrspülmaschinen, zur Übertragung von Anwahl- und Bedienfunktionen bekannt, die über entsprechende Schaltelemente am Gerät ausgelöst und vom Mikrocomputer erfasst werden. Damit bei einer derartigen Steuerungsanordnung die Anzahl der Signalleitungen reduziert werden kann, werden der Eingabevorrichtung jeweils unterschiedliche Spannungs- bzw. Widerstandswerte zugeordnet. Dadurch ist die angewählte Funktion eindeutig identifizierbar und die so gebildeten analogen Signale über eine Analog-Digitalwandler-Stufe dem Mikrocomputer zugeführt werden.

Der Erfindung liegt daher die Aufgabe zugrunde, ein Installationsgerät anzugeben, bei dem erforderliche Einstellungen mit einem einzigen Betätigungsmittel ermöglicht sind.

Diese Aufgabe wird durch ein Installationsgerät gelöst, das die im Anspruch 1 angegebenen Merkmale aufweist.

Beim vorgeschlagenen Installationsgerät ist ein Potentiometer zur Moduswahl eingesetzt.

Eine weitere Beschreibung der Erfindung und ihrer Vorteile erfolgt nachstehend anhand vom in Zeichnungsfiguren dargestellten Ausführungsbeispiel.

Es zeigen:
- Fig. 1: bekannte Ausführungen von Installationsgeräten mit Programmiertaster,
- Fig. 2: erfindungsgemäße Ausführung des Installationsgeräts, und
- Fig. 3: eine Draufsicht auf einen Drehknopf zur Betätigung eines Potentiometers und beispielhafte Markierungen am Installationsgerät.

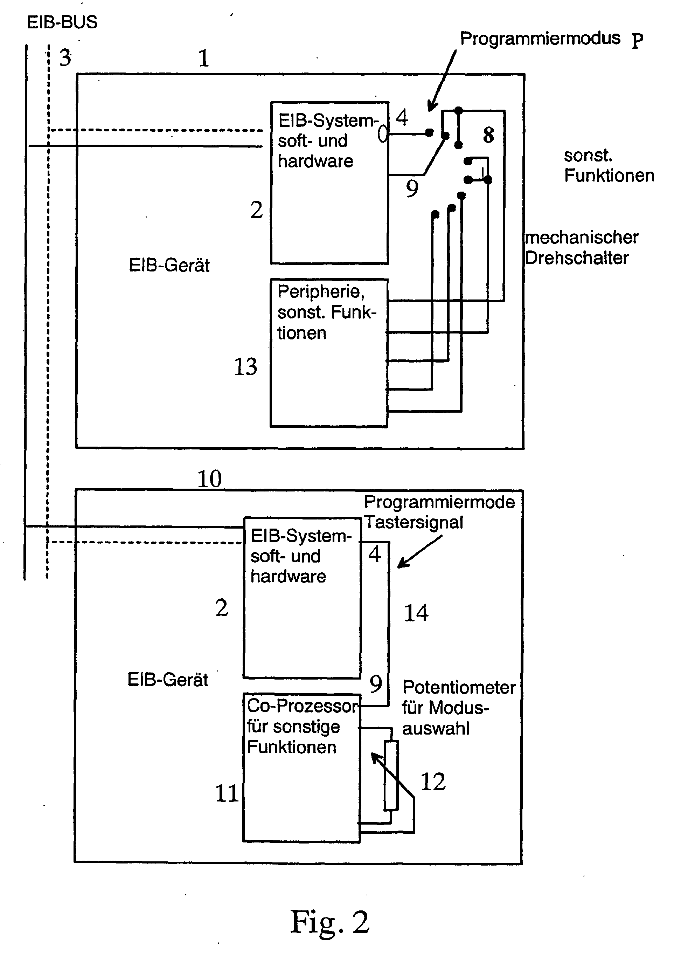

Fig. 2 zeigt EIB-Busleitungen 3, an die ein Installationsgerät 1 und ein Installationsgerät 10 angeschlossen sind.

Bei dem folgenden Beispiel handelt es sich nicht um eine Ausführungsform der Erfindung, sondern um den Stand der Technik, der das Verständnis der Erfindung erleichtert.

Das Installationsgerät 1 enthält einen Mikroprozessor 2 und periphere Mittel 13. Der Mikroprozessor 2 ist Teil nicht im Detail dargestellter EIB-Hard- und Softwaremittel. Die peripheren Mittel 13 ermöglichen bestimmte Betriebsarten und Zusatzfunktionen. Es ist außerdem ein Drehschalter 8 angeordnet, mit dessen Hilfe ein vom Mikroprozessor 2 geliefertes Steuersignal 9 in einer Drehschalterstellung P auf einen Signaleingang 4 des Mikroprozessors 2 leitbar ist, um einen Programmiermodus zu aktivieren. Mittels weiterer Drehschalterstellungen können sonstige Funktionen akti-viert werden, oder Betriebsarten oder Parameter, bzw. Kombinationen davon eingestellt werden.

### Ausführungsform der Erfindung

Das Installationsgerät 10 enthält ebenfalls einen Mikroprozessor 2 mit Signaleingang 4 zur Aktivierung des Programmiermodus. Für sonstige Funktionen ist ein Coprozessor 11 vorhanden, an den ein Potentiometer 12 zur Moduswahl angeschlossen ist.

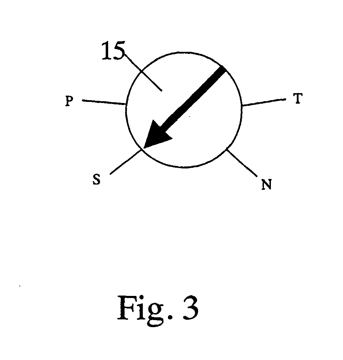

Der Coprozessor 11 ist dafür eingerichtet, abhängig von einer jeweils gewählten Potentiometerstellung N, P, S, T, entweder das Steuersignal 9 zur Aktivierung des Programmiermodus zu bilden, also das übliche Tastersignal zu emulieren, und über eine Leitung 14 zum Signaleingang 4 des Mikroprozessors 2 zu leiten, oder ein entsprechendes anderes Steuersignal zu bilden, um eine von mehreren definierten Betriebsarten, oder mindestens einen bestimmten Parameter oder mindestens eine Funktion des Installationsgeräts 10 zu aktivieren. Fig. 3 zeigt eine Draufsicht auf einen Drehknopf 15 zur Betätigung des Potentiometers 12 (Fig. 2) und zur Einstellung des Potentiometers auf beispielhafte Markierungen N, P, S, und T am Installationsgerät 10 (Fig. 2). In diesem Beispiel bedeuten P = Programmiermodus, S = Standardbetrieb, N = Normalbetrieb, und T = Testbetrieb.

## Patentansprüche

1. Installationsgerät (10), das Hard- und Softwaremittel aufweist, die mindestens einen Mikroprozessor (2) einschließlich einer EIB-Software entsprechend dem EIB(Europäischer Installationsbus)-Standard enthalten, und das für den Anschluss an EIB-Busleitungen (3) eingerichtet ist, wobei der Mikroprozessor (2) einen Signaleingang (4) für die Eingabe eines Steuersignals (9) zur Aktivierung bzw. Deaktivierung seines Programmiermodus hat, und Mittel (11, 12) zur Eingabe des Steuersignals (9) vorhanden sind, **dadurch gekennzeichnet, dass** als Mittel (11, 12) zur Eingabe des Steuersignals (9) ein Coprozessor (11) und ein damit verbundenes Potentiometer (12) vorhanden sind, wobei der Coprozessor (11) dafür eingerichtet ist, abhängig von einer jeweils gewählten Potentiometerstellung (N, P, S, T), entweder das Steuersignal (9) zu bilden, also das übliche Programmiermode Tastersignal zu emulieren, und über eine Leitung (14) zum Signaleingang (4) des Mikroprozessors (2) zur Aktivierung seines Programmiermodus zu leiten, oder ein entsprechendes anderes Steuersignal zu bilden, um eine von mehreren definierten Betriebsarten, oder mindestens einen bestimmten Parameter oder mindestens eine Funktion des Installationsgeräts (10) zu aktivieren.

## Claims

1. An installation device (10), comprising hardware and software means which comprise at least one microprocessor (2) including an EIB software according to the EIB standard (European installation bus) and which is set up for connection to EIB bus lines (3), with the microprocessor (2) having a signal input (4) for inputting a control signal (9) for activating or deactivating its programming mode and means (11, 12) for inputting the control signal (9), **characterized in that** a coprocessor (11) and a potentiometer (12) connected to the same are present as means (11, 12) for inputting the control signal (9), with the coprocessor (11) being arranged, depending on a respectively chosen potentiometer position (N, P, S, T), to either form the control signal (9), i.e. to emulate the usual programming mode for button signal, and to conduct the same via a line (14) to the signal input (4) of the microprocessor (2) for activating its programming mode, or to form another control signal in order to activate one of several defined operating modes, or at least a specific parameter or at least a function of the installation device (10).

## Revendications

1. Appareil d'installation (10) comprenant des moyens matériels et logiciels, contenant au moins un microprocesseur (2) avec un logiciel EIB conforme au standard EIB (Bus d'installation européen) et équipé en vue du branchement sur des lignes de bus EIB (3), dans lequel le microprocesseur (2) possède une entrée de signaux (4) pour l'entrée d'un signal de commande (9) destiné à activer ou à désactiver son mode de programmation, et il est prévu des moyens (11, 12) pour l'entrée du signal de commande (9), **caractérisé en ce que** les moyens (11, 12) pour l'entrée du signal de commande (9) sont un coprocesseur (11) et un potentiomètre (12) relié à celui-ci, le coprocesseur (11) étant conçu pour former, en fonction de la position choisie du potentiomètre (N, P, S, T), soit le signal de commande (9), autrement dit pour émuler le signal de capteur en mode de programmation habituel et le transmettre sur une ligne (14) à l'entrée de signaux (4) du microprocesseur (2) pour activer son mode de programmation, soit un autre signal de commande correspondant, pour activer un de plusieurs modes de fonctionnement définis ou au moins un paramètre ou au moins une fonction de l'appareil d'installation (10).
